(19) Europäisches Patentamt
European Patent Office
Office européen des brevets

(11) **EP 2 442 091 A1**

(12) **EUROPÄISCHE PATENTANMELDUNG**

(43) Veröffentlichungstag:
**18.04.2012  Patentblatt 2012/16**

(51) Int Cl.:
***G01N 5/04*** *(2006.01)*

(21) Anmeldenummer: **10187272.9**

(22) Anmeldetag: **12.10.2010**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Mettler-Toledo AG**
**8606 Greifensee (CH)**

(72) Erfinder:
• **Steinrisser, Markus**
**8708, Männedorf (CH)**
• **Vogt, Helen**
**8006, Zürich (CH)**

(54) **Verfahren und Testprobe zum Überprüfen eines Messgeräts zur gravimetrischen Feuchtigkeitsbestimmung**

(57)    Testprobe (100, 200, 300, 400, 500) zur Überprüfung eines Messgeräts (10), zur gravimetrischen Feuchtigkeitsbestimmung, wobei das Messgerät (10) einen Prüfraum (30), eine Wägevorrichtung (40) mit einer Probeaufnahme (60) zur Bestimmung der Masse der Probe (62), die sich in Messstellung im Prüfraum (30) befindet und mindestens ein Mittel zur Erwärmung (31) der auf der Probenaufnahme (60) auflegbaren Probe aufweist. Die Testprobe (100, 200, 300, 400, 500) weist eine Prüfsubstanz auf, die durch das Erhitzen reproduzierbar ihre Masse ändert und die Testprobe (100, 200, 300, 400, 500) vorportioniert und einteilig ist. Das Verfahren zur Überprüfung des Messgeräts (10) weist die folgenden Schritte auf: Aufbringen einer Testprobe (62) auf die Probenaufnahme (60), Bestimmung der Ausgangsmasse $m_0$ der Testprobe (62), Erhitzen des Prüfraums (30) mittels eines vordefinierten Temperaturprofils, Messung der Masse $m_1$ der Testprobe mit Hilfe der Wägevorrichtung (40) nachdem die Testprobe (100, 200, 300, 400, 500) mittels eines vordefinierten Temperaturprofils erhitzt wurde, Vergleich der gemessenen Masse $m_1$ mit dem Referenzwert der Masse $m_*$ und Ausgabe eines zum Resultat des Vergleichs korrespondierenden Signals. Die Testprobe (100, 200, 300, 400, 500) weist eine Prüfsubstanz auf, die durch das Erhitzen reproduzierbar ihre Masse ändert und die Testprobe (100, 200, 300, 400, 500) ist vorportioniert und einteilig.

**FIG. 1**

EP 2 442 091 A1

**Beschreibung**

Die vorliegende Erfindung betrifft ein Verfahren zum Überprüfen eines Messgeräts zur gravimetrischen Feuchtigkeitsbestimmung, sowie eine dazu geeignete Testprobe. Unter Feuchtigkeit wird dabei das Vorhandensein von unter Temperatureinfluss volatilen Stoffen, wie beispielsweise Wasser oder anderen Flüssigkeiten, in einer anderen Substanz verstanden.

Zur Bestimmung des Feuchtigkeitsgehaltes einer Probe wird diese getrocknet und das Gewicht vor und nach dem Trocknungsvorgang bestimmt.

Gegebenenfalls kann der Gewichtsverlust auch während des Trocknungsvorganges gemessen werden. Dabei nimmt bei einer Probe in Abhängigkeit von der Temperatur, der Trocknungszeit und den Prüfraumbedingungen deren Gewichtswert ab, wobei der Gewichtswert einer Gewicht-Zeitkurve folgt, die sich asymptotisch dem Trockengewicht der Probe annähert. Um zu überprüfen ob die Feuchtigkeit einer Probe einem vordefinierten Sollwert entspricht, wird die Gewichts-Zeitkurve der Probe ermittelt. Anschliessend wird die auf diese Weise ermittelte Gewichts-Zeitkurve mit einer aus Vergleichsversuchen ermittelten Vergleichskurve verglichen. Die Vergleichskurve basiert auf einer Gewichts-Zeitkurve, die durch eine Probe, deren Feuchtigkeit dem Sollwert entspricht, erhalten wurde. Falls die ermittelte Gewichts-Zeitkurve und die Vergleichskurve innerhalb vordefinierter Toleranzen übereinstimmen, entspricht die Feuchtigkeit der Probe, innerhalb des vordefinierten Toleranzwertes, dem Sollwert.

Aufgrund der zur Verfügung stehenden elektronischen Mittel kann ein entsprechend ausgerüstetes Messgerät zur gravimetrischen Feuchtigkeitsbestimmung den Feuchtigkeitsgehalt einer Probe anhand der gemessen Kurvenparameter und der Trocknungszeit errechnen und auf einer Anzeigeeinheit anzeigen. Durch diese Methode muss das zu trocknende Gut nicht mehr vollständig durchgetrocknet sein, es genügt die Ermittlung der Koordinaten zweier Erfassungspunkte im Gewicht-Zeitdiagramm.

Der Trocknungsvorgang, bei dem das zu trocknende Gut nicht vollständig durchgetrocknet wird, kann während einer vordefinierten konstanten Trocknungszeit $\Delta t$ erfolgen. Alternativ kann der Trocknungsvorgang so lange durchgeführt werden, bis die Massenänderung pro Zeiteinheit $m$ während des Trocknungsvorgangs einen vordefinierten Schwellwert $\alpha$ unterschreitet, wobei die Trocknungszeit $\Delta t$ für den Trocknungsvorgang nicht zwingend konstant ist.

Wie bereits eingangs erwähnt, verändert sich das Gewicht einer Probe während des Trocknungsvorgangs im Wesentlichen in Abhängigkeit von der Temperatur, der Trocknungszeit und den Prüfraumbedingungen. Als Prüfraum wird ein durch das Gehäuse des Messgerätes umschlossener, zwecks Einführung beziehungsweise Entfernung einer Probe öffenbarer Raum bezeichnet. Im Inneren des Prüfraums sind zudem eine Probeaufnahme und ein Mittel zur Erwärmung der Probe angeordnet. Die Probeaufnahme ist mit einem gravimetrischen Messgerät verbunden.

Üblicherweise wird eine dünne Schicht der Probe auf eine ebene Probeaufnahme, beispielsweise eine Probeschale aufgebracht. Die Schale wird im Messgerät zur gravimetrischen Feuchtigkeitsbestimmung in ihrer flächigen Ausdehnung vorzugsweise horizontal und parallel zur flächigen Ausdehnung des Mittels zur Erwärmung der Probe angeordnet, um eine gleichmässige Erwärmung der Probe zu ermöglichen.

Als Mittel zur Erwärmung der Probe werden verschiedene Strahlungsquellen wie Heizstrahler, Keramikstrahler, Halogen- und Quarzlampen verwendet. Auch die Verwendung von Mikrowellengeneratoren ist als Strahlungsquelle möglich.

Ein Messgerät zur gravimetrischen Feuchtigkeitsbestimmung der genannten Gattung ist beispielsweise aus der europäischen Patentschrift EP 0 611 956 B1 bekannt. Bei diesem Gerät erfolgt die Beschickung der Probenaufnahme ausserhalb des Messgerätes zur gravimetrischen Feuchtigkeitsbestimmung. Dazu wird die Wägevorrichtung zusammen mit der Probenaufnahme auf einem schubladenförmigen Auszug aus dem Messgerätgehäuse herausgefahren. Als Strahlungsquelle wird eine ringförmige Halogenlampe eingesetzt, welche im Betriebszustand oberhalb der Probeaufnahme angeordnet ist.

Ein weiteres Messgerät ist aus der europäischen Patentanmeldung EP 1 850 110 A1 bekannt. Bei diesem Gerät werden zwei Strahlungsquellen eingesetzt, wobei die Probenaufnahme in Messstellung zwischen der ersten und der zweiten Strahlungsquelle angeordnet ist.

Um sicher zu stellen, dass das Messgerät zur gravimetrischen Feuchtigkeitsbestimmung genau arbeitet, muss es regelmässig überprüft und gegebenenfalls justiert und/oder kalibriert werden. Eine Möglichkeit besteht darin die Wägevorrichtung und die Strahlungsquelle getrennt voneinander zu überprüfen. Für die Überprüfung der Wägevorrichtung kann eine bekannte Referenzmasse auf den Massensensor aufgebracht werden. Weicht die vom Messgerät angezeigte Masse zu stark von der Referenzmasse ab, so muss der Massensensor neu justiert werden. Für die Überprüfung der Strahlungsquelle kann an Stelle der Probe ein Referenztemperatursensor in das Messgerät eingebracht werden. Anschliessend wird das Messgerät auf eine vordefinierte Referenztemperatur erhitzt. Weicht die vom Messgerät angezeigte Temperatur zu stark von der Referenztemperatur ab, so muss die Strahlungsquelle neu justiert werden. Referenztemperatursensoren sind beispielsweise aus DE 100 24 015 C2 bekannt.

Besonders die Überprüfung der Strahlungsquelle ist zeitintensiv, da der Referenztemperatursensor zur Verbesserung der Genauigkeit in das kalte Messgerät eingebracht werden muss. Unter kaltem Messgerät wird dabei ein Messgerät bei Raumtemperatur bei ca. 20°C verstanden. Ausserdem muss abgewartet werden, bis ein stabiler Zustand erreicht wird und der Referenztemperatursensor keine Temperaturschwankungen anzeigt, was zeitaufwändig ist. Um die Zuverlässigkeit der Strahlungsquelle sicher zu stellen wird zudem empfohlen diese Überprüfung bei mehr als nur einer Referenztemperatur durchzuführen. Aus diesem Grund ist die Überprüfung aufwändig und wird deshalb vom Benutzer oft nur sporadisch durchgeführt, was zwischenzeitlich zu Unsicherheiten der Messgenauigkeit führen kann.

In US 2002/063128 A1 wird die Überprüfung der Reproduzierbarkeit von Messergebnissen beschrieben. Dazu werden Milchpulver von fünf verschiedenen Herstellern verwendet. Jedem Milchpulver jedes Herstellers werden jeweils zwei Proben entnommen und für jede dieser Proben wird der Feuchtegehalt bestimmt. Es können die Messergebnisse für zwei korrespondierende Proben verglichen werden. Basierend auf diesen Messungen können Rückschlüsse auf die Reproduzierbarkeit der Messergebnisse getroffen werden. Es können jedoch keine Rückschlüsse auf die absolute Genauigkeit des Verfahrens gemacht werden. Falls die Waage einen falschen Wert anzeigen würde, würde dies zu einem systematischen Fehler führen. Die mit der fehlerhaften Waage produzierten Messwerte wären gleich.

Bei einem weiteren, jedoch auch aufwändigen Analyseverfahren, wird mit Hilfe einer Karl-Fischer Titration die Feuchtigkeit einer Prüfsubstanz bestimmt. Anschliessend wird aus der Prüfsubstanz eine Vergleichsprobe entnommen und die Feuchtigkeit der Vergleichsprobe mit Hilfe des Messgeräts bestimmt. Liefert das Messgerät im Rahmen von zulässigen Fehlertoleranzen ein hinreichend genaues Ergebnis, so muss das Messgerät nicht neu justiert bzw. kalibriert werden. Liegt jedoch das Ergebnis ausserhalb der zulässigen Fehlertoleranzen, muss eine Justierung und/oder Kalibrierung des Messgeräts durchgeführt werden.

Auch bei diesem Analyseverfahren ist es problematisch, dass die Bestimmung der Feuchtigkeit der Prüfsubstanz mit Karl-Fischer Titration aufwändig ist und deshalb vom Benutzer oft nur sporadisch durchgeführt wird, was ebenfalls zwischenzeitlich zu Unsicherheiten der Messgenauigkeit führen kann.

WO 99/61878 A und US 2002/063128 A1 offenbaren weitere, ebenfalls aufwändige, Analyseverfahren. Bei diesen Analyseverfahren wird die Feuchtigkeit einer Prüfsubstanz mit Hilfe eines standardmässigen Konvektionsofen bestimmt. Dazu wird eine Probe der feuchten Prüfsubstanz zuerst gewogen und anschliessend im Konvektionsofen getrocknet. Nach dem Trocknen wird die Probe wieder gewogen. Aus dem Gewichtsunterschied der Probe vor und nach dem Trocknen kann die Feuchtigkeit der Prüfsubstanz ermittelt werden. Auch bei diesem Analyseverfahren ist es problematisch, dass die Bestimmung der Feuchtigkeit der Prüfsubstanz aufwändig ist und deshalb vom Benutzer oft nur sporadisch durchgeführt wird.

Es ist deshalb Aufgabe der Erfindung ein Verfahren zur Überprüfung eines Messgeräts zur gravimetrischen Feuchtigkeitsbestimmung, sowie eine dazu geeignete Testprobe zur Verfügung zu stellen, wodurch eine möglichst einfache und genaue Überprüfung des Messgeräts ermöglicht wird.

Diese Aufgabe wird mit einem Verfahren und einer dazu geeigneten Testprobe, welche die in den unabhängigen Patentansprüchen angegebenen Merkmale aufweisen, gelöst. Weitere vorteilhafte Ausführungsformen können den abhängigen Ansprüchen entnommen werden.

Die erfindungsgemässe Testprobe zur Überprüfung eines Messgeräts zur gravimetrischen Feuchtigkeitsbestimmung, wobei das Messgerät einen Prüfraum, eine Wägevorrichtung mit einer Probeaufnahme zur Bestimmung der Masse der Probe, die sich in Messstellung im Prüfraum befindet und mindestens ein Mittel zur Erwärmung der auf der Probenaufnahme auflegbaren Probe aufweist. Das Verfahren zur Überprüfung des Messgeräts weist folgenden Schritten auf:

- Aufbringen einer Testprobe auf die Probenaufnahme,

- Bestimmung der Ausgangsmasse $m_0$ der Testprobe,

- Erhitzen des Prüfraums mittels eines vordefinierten Temperaturprofils,

- Messung der Masse $m_1$ der Testprobe mit Hilfe der Wägevorrichtung nachdem die Testprobe mittels des vordefinierten Temperaturprofils erhitzt wurde,

- Vergleich der gemessenen Masse $m_1$ mit einem Referenzwert der Masse $m_*$ und

- Ausgabe eines zum Resultat des Vergleichs korrespondierenden Signals,

wobei die Testprobe eine Prüfsubstanz aufweist, die durch das Erhitzen reproduzierbar ihre Masse ändert und die Testprobe vorportioniert und einteilig ist.

Die vorportionierte Testprobe bietet den Vorteil, dass der Benutzer während der Überprüfung des Messgeräts die Testprobe nicht mehr portionieren muss. Dadurch werden Fehler vermieden und das Verfahren kann schneller durchgeführt werden.

Bei der Überprüfung des Messgeräts kann die Ausgangsmasse $m_0$ der Testprobe und die Masse $m_1$ nach dem Erhitzen des Prüfraums mittels des vordefinierten Temperaturprofils durch die Wägevorrichtung des Messgeräts bestimmt werden. Alternativ kann die Ausgangsmasse $m_0$ auch auf eine andere Weise ermittelt werden. Beispielsweise kann die Ausgangsmasse $m_0$ ausserhalb des Messgeräts zur Feuchtigkeitsbestimmung mit Hilfe einer Waage bestimmt werden und die auf diese Weise bestimmte Masse kann entweder elektronisch an das Messgerät übermittelt oder vom Benutzer eingegeben werden.

Die Testprobe dient der Überprüfung des Messgeräts. Um dies zu ermöglichen muss die Testprobe bekannte Eigenschaften aufweisen. Diese bekannten Eigenschaften können zum Beispiel eine bekannte Ausgangsmasse $m_0$ und/oder eine vom Temperaturverlauf abhängige Masse $m(t,T)$ beinhalten. Aus diesen bekannten Eigenschaften kann ein Referenzwert abgeleitet werden, der der Überprüfung des Messgeräts dient. Ein möglicher Referenzwert ist die Masse $m_*$, die vorliegt nachdem die Testprobe mit einem vordefinierten Temperaturprofil erhitzt wurde.

Zur Bestimmung des Referenzwerts der Masse $m_*$ kann beispielsweise eine Probe einer bestimmten Substanz mit bekannter Ausgangsmasse $m_0$ in ein Messgerät zur gravimetrischen Feuchtigkeitsbestimmung eingebracht werden und wird dort mit einem vordefinierten Temperaturverlauf erhitzt. Die nach dem Erhitzen vorliegende Masse entspricht der Referenzmasse $m_*$. Vor dem Bestimmen der Referenzmasse muss sichergestellt werden, dass das verwendete Messgerät genau arbeitet. Für eine Überprüfung des Messgeräts kann eine Probe verwendet werden. Die Referenzmasse $m_*$ muss nicht vor jeder Überprüfung neu bestimmt werden. Idealerweise ist die Substanz über einen längeren Zeitraum stabil, d.h. selbst nach Lagerung sollte die Erhitzung der Probe mit einem vordefinierten Temperaturprofil immer noch zu der gleichen Referenzmasse $m_*$ führen.

In einer möglichen Verwendung werden Testproben derart verpackt, dass sie selbst nach längerer Lagerung und anschliessender Anwendung des erfindungsgemässen Verfahrens zur Überprüfung des Messgeräts, zu einer reproduzierbaren Referenzmasse $m_*$ führen.

Anstelle der Absolutmassen $m_0$, $m_1$ und $m_*$ können auch die prozentualen Massenänderungen betrachtet werden. Dazu können beispielsweise die betrachteten Massen mit der Ausgangsmasse $m_0$ normiert sein. Eine weitere mögliche Grösse ist die relative Feuchteänderung, die direkt aus der Massenänderung abgeleitet werden kann. Vorzugsweise beinhaltet das vordefinierte Temperaturprofil des Erhitzens des Prüfraums auf eine vordefinierte Zieltemperatur $T_1$ und des Haltens dieser Zieltemperatur $T_1$ entweder während eines vordefinierten Zeitintervalls $\Delta t$ oder bis die Massenänderung pro Zeiteinheit $\dot{m}$ einen vordefinierten Wert $\alpha$ unterschreitet, d.h. es gilt $\dot{m} \leq \alpha$.

Es ist jedoch auch möglich ein anderes Temperaturprofil zum Erhitzen des Prüfraums zu verwenden. Die Zieltemperatur $T_1$ muss zudem gross genug sein um eine hinreichend grosse Massenänderung zu bewirken. Typischerweise wird die Zieltemperatur grösser als $100°C$ gewählt.

Die Ausgabe eines zum Resultat des Vergleichs korrespondierenden Signals, kann beispielsweise ein Alarmsignal sein, das ausgegeben wird falls die Differenz aus dem Referenzwert der Masse $m_*$ und der gemessenen Masse $m_1$ grösser als ein vordefiniertes Toleranzband ist. Als Alarmsignal kann beispielsweise eine optische Anzeige, ein Ausdruck auf Papier, ein akustisches Signal oder elektronisches Signal, das an ein anderes Gerät übermittelt wird, verstanden werden.

Anstelle der Ausgabe des Alarmsignals kann die gemessene Masse $m_1$ auch vom Benutzer abgelesen werden und mit dem Referenzwert $m_*$ verglichen werden. Dieser manuelle Vergleich birgt jedoch den Nachteil, dass er für den Benutzer aufwändiger und fehleranfälliger ist.

In bevorzugter Weiterbildung kann der Testprobe ein Informationsträger zugeordnet werden, dessen gespeicherte Daten an das Messgerät übermittelt werden können. Die gespeicherten Daten können beispielsweise die Ausgangsmasse $m_0$ und/oder einen Referenzwert der Masse wie beispielsweise $m_*$ enthalten. Diese Daten können auch den vom Temperaturverlauf abhängigen Verlauf der Masse $m(t,T)$ enthalten. Als Informationsträger können dabei Barcodes, Matrixcode, Mikrochips, Radio Frequenz Identifikations (RFID) Marken und dergleichen verwendet werden.

Die erfindungsgemässe Testprobe hat den Vorteil, dass nicht nur der Massensensor und das Mittel zur Erwärmung gleichzeitig überprüft werden können. Vielmehr kann eine Aussage über die Genauigkeit der gesamten Prüfanordnung getroffen werden. Beispielsweise haben Versuche gezeigt, dass bereits kleine Änderungen der Prüfbedingungen, wie beispielsweise die Luftzirkulation im Prüfraum, einen erheblichen Einfluss auf das Messergebnis haben können. Solche Änderungen werden vom erfindungsgemässen Verfahren miterfasst, indem die gemessene Masse $m_1$ sich von dem Referenzwert der Masse $m_*$ unterscheidet.

Das erfindungsgemässe Verfahren hat den Vorteil, dass ein Vergleich von Absolutwerten der Masse erfolgt. Auf diese Weise wird nicht nur die relative Genauigkeit, sondern die absolute Genauigkeit des Messgeräts überprüft.

Idealerweise wird bei dem erfindungsgemässen Verfahren eine Testprobe mit bekannter Ausgangsmasse $m_0$ verwendet. Beispielsweise könnte eine Substanz als Prüfsubstanz in der Testprobe verwendet werden, für die das Messgerät zur gravimetrischen Feuchtigkeitsbestimmung auch sonst standardmässig eingesetzt wird. Ein Problem dabei ist, dass das Messgerät hauptsächlich für die Bestimmung der Feuchtigkeit von Stoffen verwendet wird, die sich mit der Zeit und auf Grund von Temperaturschwankungen während der Lagerung verändern. Typische Anwendungen sind die Bestimmung der Feuchtigkeit von Lebensmitteln, wie z.B. Milchpulver, Kaffee, Schokolade, Maisstärke oder Mehl. Diese Stoffe können sich in Abhängigkeit von Umgebungseinflüssen und Zeit verändern. Es ist deshalb nicht möglich aus diesen Stoffen eine Vergleichsprobe herzustellen, diese über längere Zeit zu lagern und anschliessend für eine Überprüfung des Messgeräts zu verwenden. Selbst wenn diese Probleme gelöst werden könnten, weisen diese Stoffe oft den Nachteil auf, dass die Massenänderung in Abhängigkeit vom Temperaturprofil zu klein ist und somit keine hinreichend genaue Aussage über die Genauigkeit des Messgeräts getroffen werden kann.

Die Prüfsubstanz sollte unter üblichen Lagerbedingungen vorzugsweise über einen grösseren Zeitraum chemisch und physikalisch stabil sein, so dass die Prüfsubstanz lagerfähig ist. Eine zur Überprüfung von Messgeräten verwendete und empfohlene Prüfsubstanz ist Natriumtartrat-Dihydrat, ein Salz mit gebundenem Kristallwasser, welches sich unter Wärmeeinfluss abspaltet. Die Kristallwasser-Abspaltung endet bei einem Temperaturschwellwert $T_s$ von ca. 150°C. Eine Zieltemperatur, die grösser als dieser Temperaturschwellwert $T_s$ ist, führt demzufolge zu einer nahezu gleichen Masse. Daher ist Natriumtartrat-Dihydrat für eine präzise Überprüfung des Messgeräts oberhalb des Temperaturschwellwertes $T_s$ ungeeignet. Auch für die Verwendung unterhalb des Temperaturschwellwertes $T_s$ ist Natriumtartrat-Dihydrat ungeeignet, da in diesem Bereich der Masse-Temperaturverlauf nicht ausreichend genau reproduzierbar ist, d.h. für jede Probe anders ausfällt. Daher ist Natriumtartrat-Dihydrat für eine präzise Überprüfung des Messgeräts unterhalb des Temperaturschwellwerts $T_s$ ebenfalls ungeeignet.

Dieses Problem wird umgangen, indem die in der Testprobe enthaltene Prüfsubstanz in einem Temperaturintervall um die Zieltemperatur $T_1$ einen reproduzierbaren Temperatur-Masseverlauf aufweist. Natürliche Stoffe, wie z.B. Milchpulver, Kaffee, Schokolade, Maisstärke oder Mehl sind dazu nicht geeignet, da sie keinen reproduzierbaren Temperatur-Massenverlauf aufweisen.

Ausserdem ist das Material der erfindungsgemässen Testprobe so gewählt, dass die Massenänderung in Abhängigkeit von der Zieltemperatur $T_1$ genügend gross ist, um der Zieltemperatur $T_1$ eindeutig einen zugehörigen Referenzwert der Masse $m_*(T_1)$ zuordnen zu können. Um dies gewährleisten zu können, ist in einem Temperaturbereich um die Zieltemperatur $T_1$ der Betrag der Ableitung $dm_*(T_1)/dT_1$ des Referenzwert der Masse $m_*(T_1)$ nach der Zieltemperatur $T_1$ grösser als der Quotient aus der Massentoleranz $G_m$ der Wägevorrichtung und der Temperaturtoleranz $G_T$ der Zieltemperatur $T_1$. Natürliche Stoffe, wie z.B. Milchpulver, Kaffee, Schokolade, Maisstärke oder Mehl weisen diese Eigenschaften nicht auf. Typischerweise findet zu Beginn der Temperaturerhöhung eine relativ starke Massenabnahme statt, da volatile Stoffe, wie z.B. Wasser verdampfen. Der Verlauf dieser Massenabnahme weist zwar einen grosse Massenänderung pro Temperaturansteig auf, das heisst $dm_*(T_1)/dT_1$ ist gross genug. Diese Massenabnahme ist jedoch nicht hinreichend genau reproduzierbar und somit nicht zur Überprüfung des Messgeräts geeignet. Nach Verdampfung des Hauptteils der volatilen Stoffe ändert sich auch bei Temperaturerhöhung die Masse nur noch wenig, was einen kleinen Gradienten $dm_*(T_1)/dT_1$, zur Folge hat. In Folge dessen wird einem grossen Temperaturbereich annähernd die gleiche Masse zugeordnet, wodurch keine Aussage über die Genauigkeit des Messgeräts getroffen werden kann. Wird die Temperatur nach Verdampfung der volatilen Stoffe weiter erhöht, ändert sich die Masse in Folge von Zersetzungsprozessen wieder stärker. Die auf Zersetzungsprozessen basierende Massenänderung ist jedoch nicht hinreichend genau reproduzierbar und eignet sich deshalb nicht für die Überprüfung des Messgeräts.

Aus diesen Gründen ist es für die Überprüfung des Messgeräts vorteilhaft wenn um die Zieltemperatur eine genügend grosse Massenänderung $dm_*(T_1)/dT_1$, stattfindet. Eine grosse Massenänderung $dm_*(T_1)/dT_1$ führt zu einer grossen Änderung der Endmasse bei der Zieltemperatur $m_1(T_1)$. Infolgedessen ist die Enmasse hinreichend genau reproduzierbar.

Anstelle des Absolutbetrags der Referenzmasse $m_*(T_1)$, kann auch die relative Änderung der Referenzmasse $X_*(T_1)$ bzw. die relative Änderung der Masse nach dem Messvorgang $X(T_1)$ betrachtet werden. Die relative Änderung der Referenzmasse $X_*(T_1)$ definiert sich aus der Ausgangsmasse $m_0$ und dem Referenzwert der Masse $m_*(T_1)$ :

$$X_*(T_1) = \frac{m_o - m_*(T_1)}{m_o}$$

Die relative Änderung der Masse nach dem Messvorgang $X(T_1)$ definiert sich aus der Ausgangsmasse $m_0$ und der Masse nach dem Messvorgang $m_1$ :

$$X(T_1) = \frac{m_o - m_1}{m_o}.$$

Um gewährleisten zu können, dass jeder Zieltemperatur $T_1$ eindeutig ein $X_*(T_1)$ zugeordnet werden kann, ist der Betrag der Ableitung der relativen Änderung der Referenzmasse $X_*(T_1)$ nach der Zieltemperatur $T_1$ grösser als der Quotient aus der relativen Massentoleranz $G_x$ der Wägevorrichtung und der Temperaturtoleranz $G_T$ der Zieltemperatur $T_1$.

Die Verwendung von Absolutwerten oder relativen Werten, hat keinen Einfluss auf die Voraussetzung für das Material der Testprobe.

Für Messgeräte mit einer Temperaturtoleranz von $G_T = 3°C$ und einer relativen Massentoleranz von $G_x = 0.1\%$ muss folglich der Betrag der Ableitung der relativen Änderung der Referenzmasse $X_*(T_1)$ nach der Zieltemperatur $T_1$

grösser als $\alpha = \dfrac{G_X}{G_T} \approx 0.033\dfrac{\%}{°C}$ sein. Diese Bedingung muss mindestens in einem die Zieltemperatur $T_1$ umgebenden Temperaturbereich gelten. Üblicherweise genügt es wenn diese Bedingung in einem Intervall von $\pm 10°C$ um den Wert der Zieltemperatur $T_1$ erfüllt ist.

Idealerweise wird das Messgerät mit einer Zieltemperatur $T_1$ überprüft, die möglichst nahe der Temperatur liegt bei der das Messgerät betrieben wird. Üblicherweise werden vorgängig beschriebene Messgeräte in einem Bereich der Zieltemperatur von $80°C$ bis $200°C$ betrieben. Es ist deshalb vorteilhaft eine Testprobe zu verwenden, die auch diesen gesamten Bereich der Zieltemperatur abdecken kann. Es ist deshalb vorteilhaft wenn für alle Temperaturen grösser als $80°C$ und kleiner als $200°C$ der Betrag der Ableitung der relativen Änderung der Referenzmasse $X_*(T_1)$ nach der Zieltemperatur $T_1$ grösser als der Quotient aus der relativen Massentoleranz $G_X$ der Wägevorrichtung und der Temperaturtoleranz $G_T$ der Zieltemperatur $T_1$ ist. Für Messgeräte mit einer Temperaturtoleranz von $G_T = 3°C$ und einer relativen Massentoleranz von $G_x = 0.1\%$ ist es somit von Vorteil wenn der Betrag der Ableitung der relativen Änderung der Referenzmasse $X_*(T_1)$ nach der Zieltemperatur $T_1$ im Temperaturbereich von $80°C$ bis $200°C$ grösser als

$$\alpha = \frac{G_X}{G_T} = 0.033\frac{\%}{°C} \text{ ist.}$$

Dies bietet den Vorteil, dass die gleiche Testprobe für die Überprüfung für jede Zieltemperatur aus dem Intervall $T_1 \in [80°C, 200°C]$ benutzt werden kann.

Je grösser der Wert $\alpha$ ist, desto genauer ist das Prüfverfahren. Es ist deshalb vorteilhaft wenn Systemkomponenten und insbesondere das Material der Testprobe so gewählt sind, dass $\alpha > 0.1$ oder noch besser $\alpha > 0.3$ in einem Temperaturbereich von $80°C$ bis $200°C$ ist.

Die relative Änderung der Masse $X$ und somit auch die relative Änderung der Endmasse $X_1$ müssen hinreichend genau reproduzierbar sein. Um die Reproduzierbarkeit zu beurteilen werden mehrere Messungen durchgeführt. Die Messungen werden dabei unter den gleichen Bedingungen durchgeführt. Aus der relativen Änderung der Endmasse $X_1$, kann der arithmetische Mittelwert

$$\overline{X_1} = \frac{1}{n}\sum_{i=1}^{n} X_{1,i}$$

bestimmt werden. Dabei bezeichnet $n$ die Anzahl der durchgeführten Messungen. Die daraus resultierende Standardabweichung ergibt sich aus

$$s_X = \sqrt{\frac{1}{n-1}\sum_{i=1}^{n}(\overline{X_1} - X_{1,i})^2} \; .$$

Je kleiner $S_X$ ist, desto genauer und somit auch reproduzierbarer ist das Verfahren. Um sicherzustellen, dass sich die Temperatur $T_1$ mit einer Wahrscheinlichkeit von 95.4% in einem Intervall von $T_1 - \Delta T$ bis $T_1 + \Delta T$ befindet muss folgende Beziehung gelten:

$$\frac{2 \cdot s_X}{\alpha} \leq \Delta T$$

Das Verfahren zur Überprüfung des Feuchtemessgeräts ist gut reproduzierbar falls

$$\frac{2 \cdot s_X}{\alpha} \leq \Delta T = 5^o C$$

gilt. Falls

$$5^o C < \frac{2 \cdot s_X}{\alpha} \leq \Delta T = 10^o C$$

gilt, kann das Verfahren immer noch angewandt werden. Gilt jedoch

$$10^o C < \frac{2 \cdot s_X}{\alpha} ,$$

so ist das Verfahren nicht hinreichend genau reproduzierbar und das Verfahren kann nicht für die Überprüfung des Messgeräts herangezogen werden.Das Material der Testprobe weist eine Prüfsubstanz auf. Unterschiedliche Substanzen und Substanzmischungen sind als Prüfsubstanz geeignet, solange diese unter Temperatureinfluss eine kontrollierte Massenänderung erfahren. Eine derartige Massenänderung kann Folge einer chemischen oder physikalischen Reaktion sein, bei der die Prüfsubstanz sich beispielsweise zersetzt, umwandelt, den Aggregatzustand ändert oder eine weitere gebundene oder eingeschlossene Substanz, wie Kristallwasser, Gaseinschlüsse oder absorbierte Lösungsmittel, abgibt. Selbstverständlich können auch flüchtige Substanzen eingesetzt werden, welche beispielsweise einen Siedepunkt von mindestens 20˚C oberhalb der Raumtemperatur haben, damit diese ohne Masseverlust gelagert werden können. Vorzugsweise werden die Ausgangsmasse $m_0$ der Testprobe und die Zieltemperatur $T_1$ derart gewählt, dass nach dem vordefinierten Zeitintervall $\Delta t$ ein Rest der Prüfsubstanz verbleibt. Falls die Prüfsubstanz vor Ablauf des Zeitintervalls $\Delta t$ vollständig umgesetzt oder verbraucht wäre, kann keine weitere Massenreduktion der Prüfsubstanz erfolgen und folglich könnte keine Aussage über die Genauigkeit des Messgeräts getroffen werden.

Neben Einzelsubstanzen können selbstverständlich auch Mischungen solcher Substanzen als Prüfsubstanz eingesetzt werden.

Eine Prüfsubstanz kann mit einem Trägermaterial kombiniert werden. Grundvoraussetzung des Trägermaterials ist, dass es im Temperaturbereich von 40˚C bis 230˚$C$ eine konstante Masse aufweist. Vorteilhafterweise ist dieses Trägermaterial hitzebeständig und verändert sich in dem zuvor angegebenen Temperaturbereich nicht.

Eine weitere vorteilhafte Eigenschaft des Trägermaterials ist die gleichmässige Verteilung der Prüfsubstanz auf der Probenaufnahme, was einen positiven Einfluss auf die reproduzierbare Masseänderung unter Wärmeeinwirkung hat.

Als Trägermaterialien eignen sich insbesondere Strukturen, welche die Prüfsubstanz aufnehmen und zumindest zeitweise binden können. Solche Strukturen können Festkörper, Gele, Pulver oder Granulate aufweisen. Besonders geeignet sind poröse Adsorber oder Absorber aus keramischen oder textilen Verbindungen. Als textile Verbindungen können insbesondere Vliesstoffe oder Mikrofaserprodukte dienen. Weitere mögliche geeignete Trägermaterialien umfassen unter anderem Zeolithe, Aktivkohle, Polymere, Silikagele, Quarzverbindungen, beispielsweise Sand, Metalloxide, insbesondere Aluminiumoxid oder Mischungen daraus.

Zeolithe sind besonders vorteilhaft, da sie aufgrund ihrer mikroporösen Struktur eine hohe Aufnahmekapazität für eine geeignete Prüfsubstanz, wie beispielsweise Wasser, haben. Die Porengrösse eines Zeoliths ist über dessen Kristallstruktur definiert, wodurch die Verteilung der Porengrösse eng ist. Zeolithe sind dafür bekannt, dass sie reversibel Wasser binden können, welches bei einer Temperaturerhöhung kontinuierlich abgegeben wird. Die Wasserabgabe des Zeoliths ist stark temperatursensitiv, was zu einer betragsmässig grossen Ableitung der Masse nach der Temperatur $dm/dT$ führt. Ein weiterer Vorteil von Zeolithen ist, dass diese sowohl chemisch und als auch physikalisch sehr stabil sind und sich zudem im betrachteten Temperaturbereich nicht zersetzen. Die meisten bevorzugten Trägermaterialien verändern ihre Form im verwendeten Temperaturbereich nicht. Es ist jedoch auch denkbar Trägermaterialien zu verwenden, die bei gleichbleibender Masse temperaturabhängig, beispielsweise vor Erreichen der Zieltemperatur, ihre Struktur oder Form ändern und dadurch die Prüfsubstanz freisetzen. In einer möglichen Ausgestaltung wird beispielsweise eine temperatursensitive Prüfsubstanz in einem schmelzbaren Wachs eingeschlossen. Auf diese Weise ist bei der Lagerung der Testprobe die Prüfsubstanz im Wachs eingeschlossen und kann sich nicht verändern oder verflüchtigen. Wird die Testprobe bei der Überprüfung des Messgeräts erhitzt, schmilzt das Wachs und die Prüfsubstanz wird freigesetzt. Diese Ausgestaltung bietet Vorteile bei der Lagerung der Testprobe, da die temperatursensitive Prüfsubstanz nicht schon bei der Lagerung, sondern erst während ihres Einsatzes zur Überprüfung des Messgeräts freigesetzt wird.

Als temperatursensitive Prüfsubstanzen können Flüssigkeiten oder Lösungen verwendet werden, wobei die Prüfsubstanz beispielsweise azeotrope Gemische, Wasser, Salzlösungen, organische Lösungsmittel, Lösungsmittelgemische und/oder Mischungen daraus enthalten könnten. Die temperatursensitiven Substanzen weisen einen gut definierten Siedebereich auf. Die Auswahl der temperatursensitiven Prüfsubstanz sollte in Abhängigkeit ihres Siedepunkts und der zu überprüfenden Temperatur oder des Temperaturbereichs erfolgen. Der Siedepunkt kann dadurch verändert werden, indem Mischungen von Substanzen mit unterschiedlichen Siedepunkten als Prüfsubstanz verwendet werden. Auch durch den Zusatz von weiteren Substanzen kann der Siedepunkt der Prüfsubstanz verändert werden. Insbesondere sind Substanzen, welches in einem Bereich von $80°C$ bis $200°C$ eine mit einem Gewichtsverlust verbundene chemische oder physikalische Veränderung erfahren, als Prüfsubstanzen geeignet.

Vorteilhafterweise wird für die Überprüfung des Messgeräts möglichst wenig Zeit benötigt. Auf der anderen Seite muss jedoch die Masse der Testprobe genügend gross sein um ein hinreichend genaues Ergebnis zu liefern. Versuche haben gezeigt, dass für eine Ausgangsmasse von ca. $1g$ bis $20g$ ein vordefiniertes Zeitintervall im Bereich von $\Delta t = 300s$ bis $\Delta t = 900s$ ausreichend ist.

Die Ausgangsmasse der Testprobe $m_0$ setzt sich aus der Masse der Prüfsubstanz $m_{prüf}$ und der Masse des Trägermaterials $m_{Träger}$ zusammen:

$$m_0 = m_{prüf} + m_{Träger}$$

Die Testprobe weist im Anfangszustand, vor Beginn der Messung, einen bekannten Ausgangszustand auf. Um dies sicherzustellen muss die Verpackung der Testprobe so gewählt werden, dass dieser bekannte Anfangszustand bis zum Durchführen der Überprüfung des Messgeräts hinreichend stabil ist. Eine Testprobe wird in der Regel nur für eine Überprüfung verwendet. Eine mehrmalige Verwendung ist normalerweise nicht möglich.

In einer möglichen Ausführungsform ist die Testprobe einstückig ausgebildet. Dies kann beispielsweise dadurch erreicht werden, in dem das Trägermaterial zu einer Tablette verarbeitet werden. Das zu einer Tablette gepresste Trägermaterial dient der Aufnahme der Prüfsubstanz.

In weiteren möglichen Ausführungsformen ist die Testprobe einteilig ausgebildet. Bei einer einteiligen Ausführungsform kann eine mehrteilige Prüfsubstanz und/oder Trägermaterial, wie dies zum Beispiel bei einem Granulat der Fall ist, mittels einer Prüfsubstanzaufnahme aufgenommen werden. Die Prüfsubstanzaufnahme kann gaspermeabel sein. Es ist auch die Verwendung eines feuchtigkeitsdurchlässigen Materials für die Prüfsubstanzaufnahme denkbar. Die Prüfsubstanzaufnahme bildet eine geschlossene Hülle in deren Innere die Prüfsubstanz und eventuell das Trägermaterial angeordnet ist. Die Prüfsubstanz und/oder das Trägermaterial kann die Form eines Pulvers und/oder eines Granulats aufweisen, das von der gaspermeablen Prüfsubstanzaufnahme komplett umgeben ist. Die Testprobe ist dabei ähnlich einem Teebeutel oder Kaffeepad ausgestaltet. Während der Überprüfung des Messgeräts können volatile Stoffe durch die gaspermeable Prüfsubstanzaufnahme entweichen, wodurch sich eine Gewichtsreduktion der Testprobe ergibt. Die gaspermeable Prüfsubstanzaufnahme kann beispielsweise aus einem Gewebe oder aus Papier bestehen. Ein Vorteil dieser Ausführungsform besteht darin, dass die Form der Testprobe immer gleich ist und somit die Prüfbedingungen konstanter sind und die Ergebnisse reproduzierbarer sind.

In einer weiteren möglichen Ausführungsform besteht die Prüfsubstanzaufnahme aus einem nicht-gaspermeablen Material, wobei die Prüfsubstanzaufnahme mindestens eine Öffnung aufweist durch die Gas entweichen kann. Zu Lagerungszwecken ist diese mindestens eine Öffnung mit einem nicht-permeablen Material verschlossen. Das nicht-permeable Material wird erst unmittelbar vor dem Überprüfen des Messgeräts entfernt. Auf diese Weise wird verhindert, dass bereits vor dem Überprüfen des Messgeräts volatile Stoffe aus der Testprobe entweichen können, was zu Verfälschungen des Messergebnisses führen könnte. Eine mögliche Ausgestaltung ist ein hitzebeständiger Behälter mit mindestens einer Öffnung, die mit einem entfernbaren Deckel verschlossen ist. Der hitzebeständige Behälter weist bevorzugterweise einen flachen Boden der eine gleichmässige Verteilung der Prüfsubstanz und des Trägermaterials ermöglicht. Durch die gleichmässige Verteilung kann sichergestellt werden, dass die volatilen Stoffe der Prüfsubstanz während der Überprüfung gleichmässig abgeben werden können. Der hitzebeständige Behälter kann beispielsweise aus Metall gefertigt sein.

Idealerweise ist die Form der Testprobe an die Form der Probenaufnahme des Messgeräts derart angepasst, dass die Testprobe gleichmässig die Probenaufnahme bedeckt. Ein Vorteil dieser Ausführungsform besteht darin, dass die Position der Testprobe im Prüfraum vorgegeben ist. Somit sind die Prüfbedingungen konstanter und die Ergebnisse sind reproduzierbarer.

Zu Lagerungszwecken wird die Testprobe idealerweise von einer Hülle aus nicht-permeablen Material umschlossen. Diese Hülle wird erst unmittelbar vor Durchführung der Überprüfung des Messgeräts entfernt. Auf diese Weise wird sichergestellt, dass die volatilen Stoffe der Testprobe sich nicht bereits während der Lagerung verflüchtigen, was zu Ungenauigkeiten während der Überprüfung führen würde.

Ein Beispiel für ein Messgerät zur gravimetrischen Feuchtigkeitsbestimmung, typische Temperatur-Massenverläufe und mögliche Ausführungsformen der Testprobe sind in den folgenden Figuren dargestellt. Es zeigen:

Figur 1        einen Schnitt durch ein Messgerät zur gravimetrischen Feuchtigkeitsbestimmung,

Figur 2a       einen typischen Temperatur-Massenverlauf für Natriumtartrat-Dihydrat, wobei Natriumtartrat-Dihydrat eine bereits aus dem Stand der Technik bekannte Prüfsubstanz ist ,

Figur 2b       einen Temperatur-Massenverlauf für zwei erfindungsgemässe Prüfsubstanzen,

Figur 3        den Temperatur-Massenverlauf für einen mit einer Salzlösung beladenen Zeolithen und Natriumtartrat-Dihydrat,

Figur 4        die gemessene Masse nach der Anwendung des erfindungsgemässen Verfahrens auf eine Testprobe, die einen mit einer Salzlösung beladenen Zeolith enthält,

Figur 5        einstückiges Trägermaterial, das mit einer Testsubstanz beladen wird,

Figur 6a, b    Prüfsubstanzaufnahmen aus permeablen Material,

Figur 7a, b    Umverpackung der Testprobe und

Figur 8        Prüfsubstanzaufnahmen aus nicht-permeablem Material.

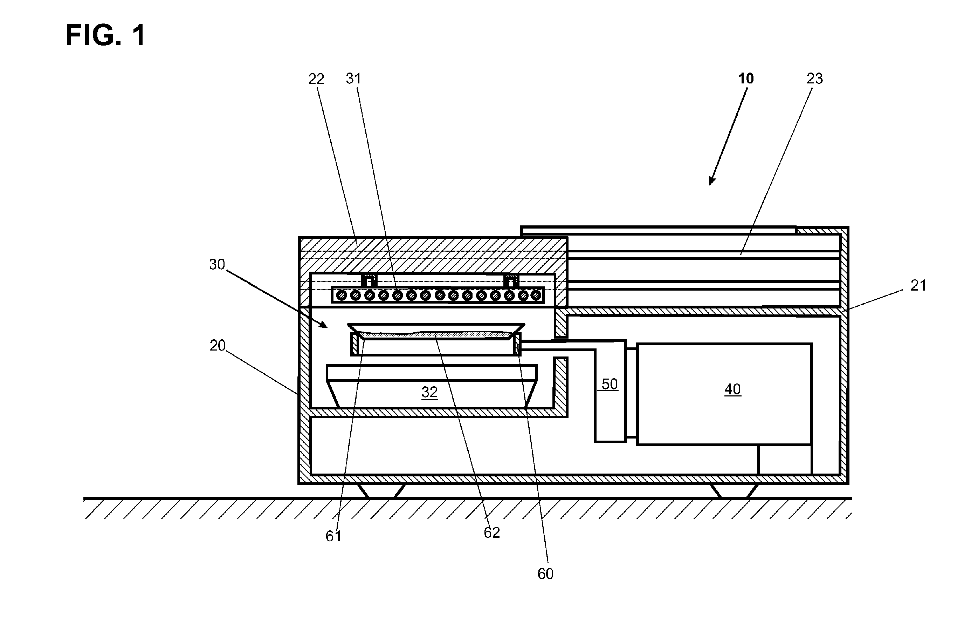

Figur 1 zeigt einen Schnitt durch ein typisches Messgerät 10 zur gravimetrischen Feuchtemessung mit einer Probenaufnahme 60 und einer Probenschale 61 zur Aufnahme einer Probe. Die Probenaufnahme 60 ist über ein Verbindungsglied 50 mit einer Wägevorrichtung 40 verbunden. Die Wägevorrichtung 40 dient der Bestimmung der Masse der Probe.

Die Probenaufnahme 60 befindet sich in einem Prüfraum 30, der mit Hilfe von mindestens einer ersten Strahlungsquelle 31 erwärmt werden kann. Optional kann die Probe zusätzlich mit einer zweiten Strahlungsquelle 32 erwärmt werden. Idealerweise befindet sich die erste Strahlungsquelle 31 oberhalb der Probe und die zweite Strahlungsquelle 32 unterhalb der Probe. Befindet sich die Probe zwischen den beiden Strahlungsquellen 31, 32, wird dadurch eine gleichmässige Erwärmung der Probe sicher gestellt. Als Strahlungsquellen 31, 32 können beispielsweise eine Heizplatte, eine Heizfolie, ein Heizstrahler, ein Keramikstrahler, eine Induktionsspule, eine Halogen- oder eine Quarzlampe eingesetzt werden.

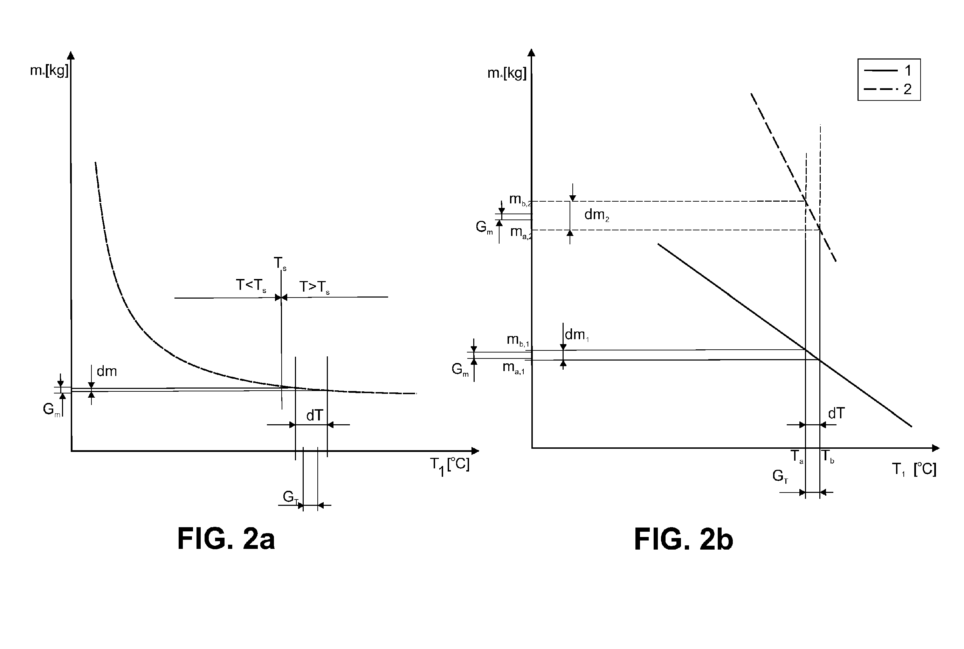

Das Messgerät 10 ist in einem Gehäuse 20 untergebracht. Das Gehäuse 20 besteht aus einem feststehenden 21 und einem beweglichen 22 Gehäuseteil. Der bewegliche Gehäuseteil 22 kann auf Führungsschienen 23 verschoben werden. Durch Verschieben des beweglichen Gehäuseteils 22 wird der Prüfraum 30 geöffnet und es kann eine Probe 62 auf die Probenaufnahme 60 gebracht werden, oder von dieser entfernt werden. Die Figuren 2a und 2b stellen Temperatur-Massenverläufe dar. Dabei ist auf der horizontalen Achse die Zieltemperatur $T_1$ und auf der vertikalen Achse die daraus nach einem vordefinierten konstanten Zeitintervall $\Delta t$ resultierende zu erwartende Referenzmasse $m_*$($T_1$) aufgetragen. Prinzipiell führt eine höhere Zieltemperatur $T_1$ zu einem grösserem Massenverlust und somit zu einer kleineren Referenzmasse $m_*(T_1)$.

In Figur 2a ist schematisch ein typischer Temperatur-Massenverlauf für Natriumtartrat-Dihydrat dargestellt.

Natriumtartrat-Dihydrat ist eine aus dem Stand der Technik bekannte Prüfsubstanz.

Bei Temperaturen grösser als dem Temperaturschwellwert $T_s$ weist der Graph eine kleine Steigung auf. Selbst Zieltemperaturen, die weiter als die Temperaturtoleranz $G_T$ auseinander liegen, führen zu Massen, die innerhalb der Massentoleranz $G_M$ der Wägevorrichtung 40 liegen. Somit kann keine Aussage über die Genauigkeit des Messgeräts getroffen werden.

Auch für Verwendung unterhalb des Temperaturschwellwertes $T_s$ ist Natriumtartrat-Dihydrat ungeeignet, da in diesem Bereich, wie eingangs erwähnt, der Masse-

Temperaturverlauf nicht ausreichend genau reproduzierbar ist und daher für eine präzise Überprüfung des Messgeräts ebenfalls ungeeignet ist.

Figur 2b zeigt zwei Graphen mit jeweils einem exemplarischen Temperatur-Massenverlauf für zwei unterschiedliche erfindungsgemässe Prüfsubstanzen. Die beiden Graphen unterscheiden sich durch eine unterschiedliche Steigung des Temperatur-Massenverlaufs. Die Steigung des Temperatur-Massenverlaufs wird durch die Ableitung der Masse nach der Temperatur, $dm/dT$, wiedergegeben. Aus den beiden Graphen 1 und 2 geht hervor, dass falls betragsmässig die Ableitung der Masse nach der Temperatur grösser als der Quotient aus dem Temperaturtoleranz $G_T$ und der Massentoleranz $G_m$, das heisst $dm/dT > G_m / G_T$, so kann für zwei unterschiedliche Zieltemperaturen $T_a$ bzw. $T_b$, die mindestens durch die Temperaturtoleranz $G_T$ voneinander beabstandet sind, jeweils ein Referenzwert der Masse $m_{a,1}$ bzw. $m_{b,1}$ zugeordnet werden. Dabei sind die beiden Massen $m_{a,1}$ und $m_{b,1}$ weiter als die Massentoleranz $G_m$ voneinander beabstandet. Dadurch wird sichergestellt, dass sich die beiden Massen $m_{a,1}$ und $m_{b,1}$ nicht innerhalb der Massentoleranz $G_m$ befinden und es kann eine präzise Aussage über das Messgerät gemacht werden.

Je grösser der Gradient $dm/dT$ ist, desto genauer ist dabei das Verfahren. Dies wird durch einen Vergleich der Graphen 1 und 2 veranschaulicht. Graph 2 weist eine grössere Steigung als Graph 1 auf. Daraus resultiert, dass für betragsmässig grössere Gradienten $dm/dT$ bei zwei unterschiedlichen Zieltemperaturen $T_a$ bzw. $T_b$ die Referenzwerte der Masse $m_{a,2}$ und $m_{b,2}$ weiter auseinander liegen. Dadurch ist eine präzisere Aussage über die Genauigkeit des Messgeräts möglich ist.

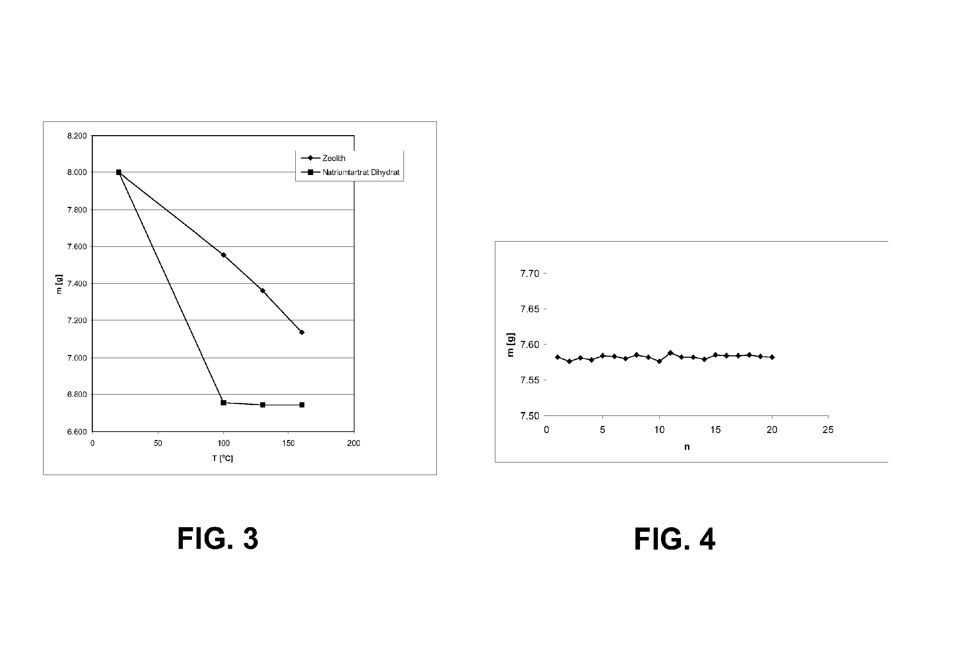

Figur 3 zeigt den Temperatur-Massenverlauf für ein Natriumtartrat Dihydrat und einen mit einer Salzlösung beladenen Zeolithen. Es wird ein Temperaturintervall von $20°C$ bis $160°C$ betrachtet. Es wird ein Zeolith des Typs 3A verwendet. Dieser Zeolith hat eine kleine Porengrösse. Versuche haben gezeigt, dass für diesen Zeolithen gute Ergebnisse hinsichtlich Genauigkeit und Reproduzierbarkeit der Messergebnisse erzielt werden konnten. Es wurde eine 5%ige Salzlösung verwendet. Es ist jedoch auch möglich eine andere Salzkonzentration oder Wasser zu verwenden.

Jeweils eine Probe mit Zeolith beziehungsweise Natriumtartrat Dihydrat werden in das Feuchtemessgerät eingebracht und anschliessend erhitzt. Die Masse der Probe ist zu Beginn des Verfahrens sowohl für den Zeolithen als auch das Natriumtartrat jeweils 8 Gramm. Anschliessend wird die Probe durch ein vordefiniertes Temperaturprofil erhitzt. Beim Erhitzen der Proben verringert sich das Gewicht der Proben. Aus dem dargestellten Temperatur-Massenverlauf geht hervor, dass die Masse des Natriumtartrat Dihydrats zwischen $20°C$ und $100°C$ stakt abnimmt. Ab einer Temperatur von $100°C$ ändert sich die Masse des Natriumtratrat Dihydrats nur noch marginal. Diese kleinen Massenänderungen erlauben keine eindeutige Zuordnung von Temperatur und Masse. Eine Überprüfung des Feuchtemessgeräts mit dem erfindungsgemässen Verfahren ist mit Natriumtartrat Dihydrat demzufolge nicht möglich.

Bei Zeolithen hingegen ändert sich die Masse in Abhängigkeit von der Temperatur über dem gesamten betrachteten Temperaturintervall. Es ist somit eine eindeutige Zuordnung von Temperatur und Masse möglich.

Figur 4 zeigt die relative Änderung der Endmasse $X_1$ nach der Anwendung des erfindungsgemässen Verfahrens auf zwanzig Testproben. Die verwendeten Testproben enthalten Zeolith 3A, der mit einer 5%igen Salzlösung beladen ist. Die Testprobe wiegt zu Beginn acht Gramm und wird auf $T_1 = 100°C$ bzw. $T_1 = 160°C$ erhitzt. Die Temperatur $T_1 = 100°C$ bzw. $T_1 = 160°C$ wird anschliessend während zehn Minuten gehalten. Anschliessend wird die relative Änderung der Endmasse $X_1$ unter Zuhilfename einer Waage bestimmt. Das Verfahren wurde sowohl für $T_1 = 100°C$ als auch für $T_1 = 160°C$ zwanzig Mal wiederholt. Die dabei ermittelten relativen Änderungen der Endmasse $X_1$ sind in Figur 4 dargestellt. Aus den zwanzig $X_1$ wird der Mittelwert

$$\overline{X_1} = \frac{1}{20}\sum_{i=1}^{20} X_{1,i} = 5.22\% \text{ für } T_1 = 100^oC \text{ bzw.}$$

$$\overline{X_1} = \frac{1}{20}\sum_{i=1}^{20} X_{1,i} = 10.149\% \ \ \text{für} \ T_1 = 160^{o}C$$

bestimmt.

Dabei bezeichnet *n* = 20 die Anzahl der durchgeführten Messungen. Die daraus resultierende Standardabweichung ergibt sich zu

$$s_X = \sqrt{\frac{1}{20-1}\sum_{i=1}^{20}(\overline{X_1} - X_{1,i})^2} \approx 0.038\% \ \ \text{für} \ T_1 = 100^{o}C \ \ \text{bzw.}$$

$$s_X = \sqrt{\frac{1}{20-1}\sum_{i=1}^{20}(\overline{X_1} - X_{1,i})^2} \approx 0.079\% \ \ \text{für} \ T_1 = 160^{o}C \, .$$

Messungen haben für $\alpha = 0.09 \ \dfrac{\%}{{}^{o}C}$ ergeben. Damit ergibt sich: $\dfrac{2 \cdot s_X}{\alpha} = \dfrac{2 \cdot 0.038\%}{0.09\dfrac{\%}{{}^{o}C}} \approx 0.84^{o}C$

für $T_1$ =100˚C bzw. $\dfrac{2 \cdot s_X}{\alpha} = \dfrac{2 \cdot 0.079\%}{0.09\dfrac{\%}{{}^{o}C}} \approx 0.175^{o}C$ für $T_1$ = 160˚C .Somit gilt sowohl für $T_1$ = 100˚C als auch

$$T_1 = 160^{o}C$$

$$\frac{2 \cdot s_X}{\alpha} \leq \Delta T = 5^{o}C \, .$$

Es konnte somit gezeigt werden, dass das verwendete Verfahren zur Überprüfung des Feuchtemessgeräts mit den erfindungsgemässen Testproben gut reproduzierbare Werte liefert.

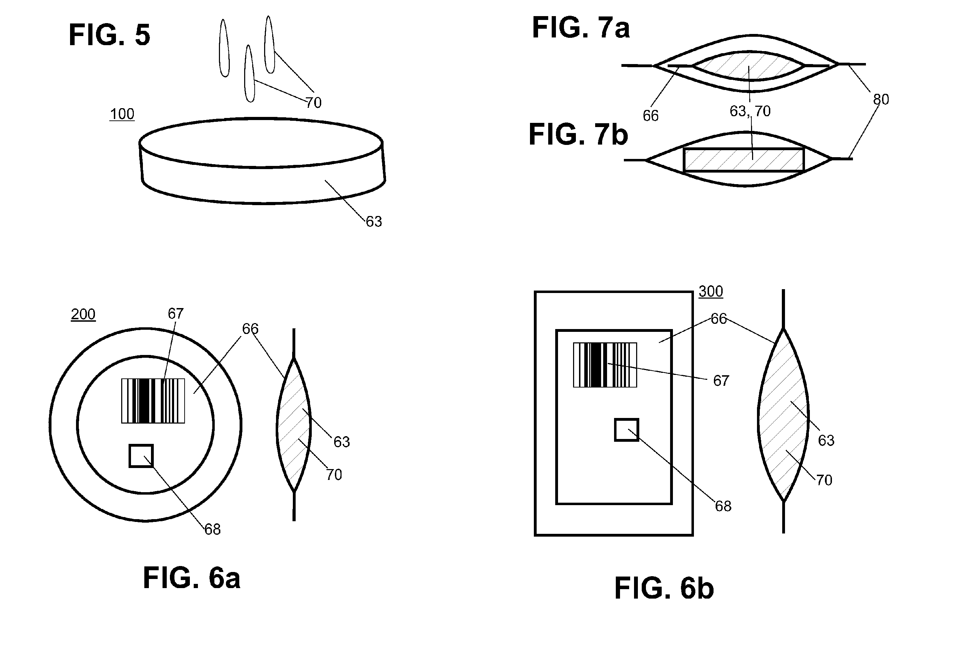

Figur 5 zeigt eine Testprobe 100, die aus einem einstückigen Trägermaterial 63 besteht, das mit einer flüssigen Prüfsubstanz 70 beladen wird. Das einstückige Trägermaterial 63 kann beispielsweise aus Zeolith, Aktivkohle, Polymere, Silikagele, Quarzverbindungen, Metalloxide, insbesondere Aluminiumoxid, keramische oder textilen Verbindungen oder Mischungen aus diesen Materialen bestehen.

Die Figuren 6a und 6b zeigen Testproben 200, 300. Die Testproben 200, 300 weisen Prüfsubstanzaufnahmen 66 aus permeablen Material auf. Die Prüfsubstanz 70 und evtl. das Trägermaterial 63 sind im Innern des permeablen Materials angeordnet. Wird die Testprobe während der Überprüfung des Messgeräts 10 erhitzt, gibt die Testprobe 200,300 volatile Stoffe ab. Diese volatile Stoffe können durch das permeable Material entweichen, wodurch die Testprobe 200,300 an Masse verliert. Der Testprobe 200,300 sind Informationsträger 67, 68 zugeordnet. Auf dem Informationsträger 67, 68 können Daten gespeichert werden. Mit Hilfe von geeigneten Übertragungsgeräten können diese Daten an das Messgerät 10 oder ein anderes geeignetes Gerät übertragen werden. Die gespeicherten Daten können beispielsweise die Ausgangsmasse $m_0$ und/oder den Referenzwert der Masse $m_*$ enthalten. Als Informationsträger kann beispielsweise ein Barcode 67 oder eine Identifikations (RFID) Marke 68 verwendet werden. Die Prüfsubstanzaufnahme 66 kann eine beliebige Form aufweisen. In Fig. 6a ist eine runde und in Fig. 6b eine eckige Form dargestellt.

Um das Entweichen von volatilen Stoffen der Testprobe 100, 200, 300 aus Figur 5, 6a und 6b während der Lagerung zu unterbinden, wird die Testprobe 100, 200, 300 idealerweise mit einer in Figur 7a oder 7b dargestellten Umverpackung 80 verpackt. Die Umverpackung 80 weißt während der Lagerung keine Öffnungen auf und besteht aus einem nicht-permeablen Material. Üblicherweise weist die Umverpackung 80 einen nicht-permeablen Kunststoff auf. Unmittelbar vor der Überprüfung des Messgeräts kann die Umverpackung 80 geöffnet werden.

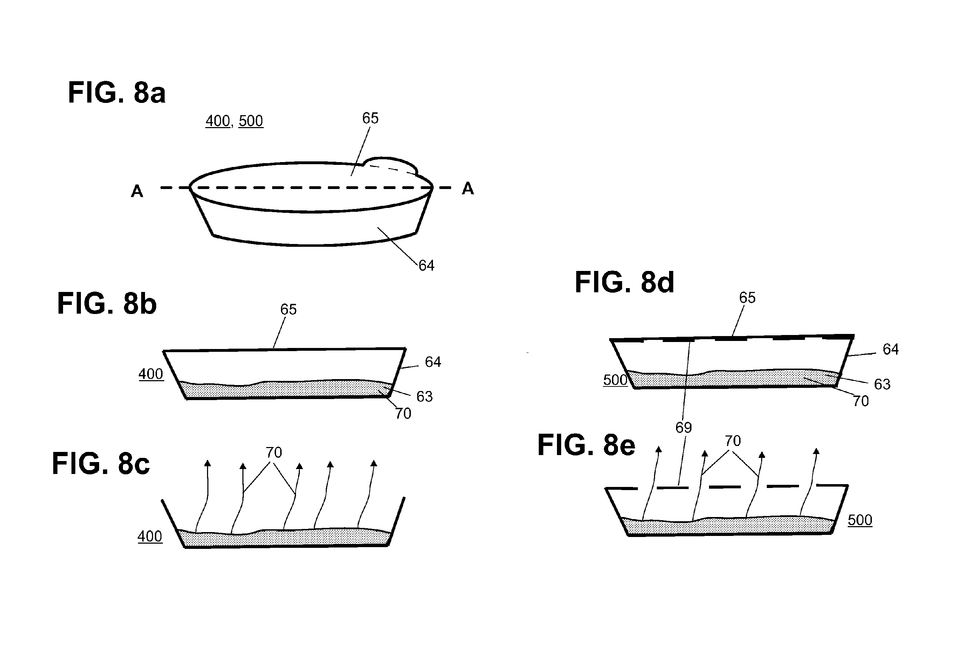

Figur 8a zeigt eine Testprobe 400, 500, die eine Prüfsubstanzaufnahme 64 aus nicht-permeablen Material aufweist. In der Prüfsubstanzaufnahme 64 befindet sich die Prüfsubstanz 70 und eventuell ein Trägermaterial 63, das die Prüfsubstanz 70 aufnimmt. Die Prüfsubstanzaufnahmen 64 weisen mindestens eine Öffnung auf durch die Gas aus dem Inneren der Prüfsubstanzaufnahme 64 entweichen kann. Damit die Prüfsubstanz 70 während der Lagerung ihre bekannten Eigenschaften beibehält, muss die mindestens eine Öffnung mit einem nicht-permeablen Material verschlossen sein. Das nicht-permeable Material wird erst unmittelbar vor dem Überprüfen des Messgeräts entfernt. Auf diese Weise wird verhindert, dass bereits vor dem Überprüfen des Messgeräts volatile Stoffe aus der Testprobe 400, 500 entweichen können, was zu Verfälschungen des Messergebnisses führen könnte. Damit die Prüfsubstanzaufnahme 64 während der Überprüfung des Messgeräts nicht zerstört wird, muss die Prüfsubstanzaufnahme 64 hitzebeständig sein. Idealerweise ist die Prüfsubstanzaufnahme 64 aus Metall gefertigt. Eine mögliche Ausgestaltung ist ein hitzebeständiger Behälter mit mindestens einer Öffnung, die mit einem entfernbaren Deckel 65 verschlossen ist. Der Deckel 65 kann aus dem gleichen Material wie die Prüfsubstanzaufnahme 65 gefertigt sein. Der Deckel 65 muss jedoch nicht notwendigerweise aus hitzebeständigen Material gefertigt sein. Es ist deshalb auch möglich den Deckel 65 aus einem nicht-hitzebeständigen Material zu fertigen. Ein mögliches Material für den Deckel 65 ist beispielsweise Kunststoff, was günstiger und einfacher in der Herstellung ist als ein aus Metall gefertigter Deckel 65. Der hitzebeständige Behälter weist bevorzugterweise einen flachen Boden auf, der eine gleichmässige Verteilung der Prüfsubstanz 70 und des Trägermaterials 63 ermöglicht. Durch die gleichmässige Verteilung kann sichergestellt werden, dass die volatilen Stoffe der Prüfsubstanz 70 während der Überprüfung gleichmässig abgeben werden können. Ausserdem muss eine genügend grosse Menge an Prüfsubstanz 70 und Trägermaterial 63 verwendet werden um eine gleichmässige Verteilung auf dem Boden der Prüfsubstanzaufnahme 64 zu gewährleisten.

Es ist vorteilhaft, wenn die Testprobe 100, 200, 300, 400, 500 die Probenschale 61 gleichmässig ausfüllt. Bei einer runden Probenschale 61 ist es deshalb vorteilhaft, wenn die Testprobe 100, 200, 300, 400, 500 ebenfalls rund ist. Weiterhin ist es vorteilhaft falls die Prüfsubstanz gleichmässig in der Probenschale verteilt ist. Dies kann dadurch erreicht werden, dass die Testprobe 100, 200, 300, 400, 500 näherungsweise eine konstante Dicke aufweist. Eine flach ausgebildet Testprobe 100, 200, 300, 400, 500 stellt sicher, dass die Prüfsubstanz 70 während der Überprüfung des Messgeräts 10 gleichmässig abgegeben wird.

In den Figuren 8b und 8c ist ein Schnitt an der Linie A-A durch eine mögliche Ausgestaltung der in Figur 8a gezeigten Testprobe 400, 500 dargestellt. Figur 8b zeigt diese Ausgestaltung mit Deckel 65 und in Figur 8c wurde dieser Deckel 65 bereits entfernt um ein austreten der volatilen Prüfsubstanz 70 während der Überprüfung des Messgeräts zu ermöglichen. Diese Ausgestaltung weist genau eine Öffnung auf, durch die die volatile Prüfsubstanz 70 entweichen kann. Die Öffnung erstreckt sich über der gesamten Grundfläche der Prüfsubstanzaufnahme 64. Diese Ausgestaltung hat den Vorteil, dass die volatilen Stoffe der Prüfsubtanz 70 ohne Widerstand aus der Testprobe 400, 500 entweichen können.

In den Figuren 8d und 8e ist ein Schnitt an der Linie A-A durch eine weitere mögliche Ausgestaltung der in Figur 8a gezeigten Testprobe 400, 500 dargestellt. Figur 8d zeigt diese Ausgestaltung mit Deckel 65 und in Figur 8e wurde dieser Deckel 65 bereits entfernt um ein austreten der volatilen Prüfsubstanz 70 während der Überprüfung des Messgeräts zu ermöglichen. Diese Ausgestaltung weist mehrere Öffnungen auf durch die die volatile Prüfsubstanz 70 entweichen kann. Diese Ausgestaltung hat den Vorteil, dass die Öffnungen kleiner sind und die Prüfsubstanz 70 und das Trägermaterial 63 vor unbeabsichtigtem Verschütten geschützt sind.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten ausgetauscht werden.

Insbesondere ist das erfindungsgemässe Verfahren nicht auf die Verwendung des beschriebenen Messgeräts (10) beschränkt. Es kann bei den meisten handelsüblichen gravimetrischen Messgeräten zur Feuchtigkeitsbestimmung verwendet werden.

Bezugszeichenliste

| 10 | Messgerät |
| 19 | Führungsschiene |
| 20 | Gehäuse |
| 21 | Feststehendes Gehäuseteil |
| 22 | Bewegliches Gehäuseteil |
| 23 | Führungsschiene |
| 30 | Prüfraum |
| 31 | Erste Strahlungsquelle |
| 32 | Zweite Strahlungsquelle |
| 40 | Wägevorrichtung |
| 50 | Verbindungsglied |
| 60 | Probenaufnahme |
| 61 | Probenschale |
| 62 | Probe |
| 63 | Trägermaterial |
| 64 | Prüfsubstanzaufnahme |
| 65 | Deckel |
| 66 | Prüfsubstanzaufnahme |
| 67 | Barcode |
| 68 | RFID |
| 69 | Abdeckung |
| 70 | Prüfsubstanz |
| 80 | Umverpackung |
| 100, 200, 300, 400, 500 | Testprobe |

Liste der verwendeten Symbole:

| $\alpha$ | Vordefinierter Schwellwert der Massenänderung pro Zeiteinheit [$kg/s$] |

| | |
|---|---|
| $G_m$ | Massentoleranz [$kg$] |
| $G_T$ | Temperaturtoleranz [$\degree C$] |
| $G_X$ | Relative Massentoleranz [-] |
| $m$ | Masse [$kg$] |
| $m_{prüf}$ | Masse der Prüfsubstanz [$kg$] |
| $m_{Träger}$ | Masse des Trägermaterials [$kg$] |
| $m_*$ | Referenzwert der Masse [$kg$] |
| $m_0$ | Ausgangsmasse [$kg$] |
| $m_1$ | Masse nach dem Erhitzen des Prüfraums mittels eines vordefinierten Temperaturprofils [$kg$] |
| $s$ | Relative Standardabweichung [-] |
| $\Delta t$ | Vordefiniertes Zeitintervall [$s$] |
| $T$ | Temperatur [$\degree C$] |
| $T_0$ | Ausgangstemperatur [$\degree C$] |
| $T_1$ | Zieltemperatur [$\degree C$] |
| $T_s$ | Temperaturschwellwert [$\degree C$] |
| $X_* =(m_o-m_*)/m_o$ | Relativer Änderung der Referenzmasse [-] |
| $X = (m_o-m_1)/m_o$ | Relativer Änderung der Masse [-] |
| $\alpha$ | Ableitung des relativen Massenverlusts X nach der Zieltemperatur $T_1$ $\left[ \dfrac{\%}{\degree C} \right]$ |

**Patentansprüche**

1. Testprobe (100, 200, 300, 400, 500) zur Überprüfung eines Messgeräts (10), zur gravimetrischen Feuchtigkeitsbestimmung, wobei das Messgerät (10) einen Prüfraum (30), eine Wägevorrichtung (40) mit einer Probeaufnahme (60) zur Bestimmung der Masse der Probe (62), die sich in Messstellung im Prüfraum (30) befindet und mindestens ein Mittel zur Erwärmung (31) der auf der Probenaufnahme (60) auflegbaren Probe (62) aufweist und das Verfahren zur Überprüfung des Messgeräts (10) die folgenden Schritte aufweist:

   - Aufbringen der Testprobe (100, 200, 300, 400, 500) auf die Probenaufnahme (60),
   - Bestimmung der Ausgangsmasse $m_0$ der Testprobe (100, 200, 300, 400, 500),
   - Erhitzen des Prüfraums (30) mittels eines vordefinierten Temperaturprofils,
   - Messung der Masse $m_1$ der Testprobe (100, 200, 300, 400, 500) mit Hilfe der Wägevorrichtung (40) nachdem die Testprobe (100, 200, 300, 400, 500) mittels des vordefinierten Temperaturprofils erhitzt wurde,
   - Vergleich der gemessenen Masse $m_1$ mit einem Referenzwert der Masse $m_*$ und
   - Ausgabe eines zum Resultat des Vergleichs korrespondierenden Signals **dadurch gekennzeichnet, dass** die Testprobe (100, 200, 300, 400, 500) eine Prüfsubstanz aufweist, die durch das Erhitzen reproduzierbar ihre Masse ändert und die Testprobe (100, 200, 300, 400, 500) vorportioniert und einteilig ist.

2. Testprobe (100, 200, 300, 400, 500) nach Anspruch 1, **dadurch gekennzeichnet, dass** die Testprobe (100, 200, 300, 400, 500) ein Trägermaterial aufweist, dessen Masse in einem Temperaturbereich von $T_1$ = 40˚C bis 230˚C annähernd konstant bleibt.

**3.** Testprobe (100, 200, 300, 400, 500) nach Anspruch 2, **dadurch gekennzeichnet, dass** das Trägermaterial Festkörper, Gele, Pulver oder Granulate enthält.

**4.** Testprobe (100, 200, 300, 400, 500) nach Anspruch 3 oder 4, **dadurch gekennzeichnet, dass** das Trägermaterial ein poröses Material enthält.

**5.** Testprobe (100, 200, 300, 400, 500) nach Anspruch 2, 3 oder 4, **dadurch gekennzeichnet, dass** das Trägermaterial Zeolithe, Aktivkohle, Polymere, Silikagele, Quarzverbindungen, Metalloxide, keramischen oder textilen Verbindungen oder Mischungen daraus enthält.

**6.** Testprobe (200, 300, 400, 500) nach einem der vorausgehenden Ansprüche, **dadurch gekennzeichnet, dass** die Form der Testprobe (200, 300, 400, 500) der Probenaufnahme (60) angepasst ist und/oder die Testprobe (200, 300, 400, 500) gleichmässig in der Probenaufnahme (60) verteilt ist.

**7.** Testprobe (100) nach einem der vorausgehenden Ansprüche, **dadurch gekennzeichnet, dass** die Testprobe (100) einstückig ist.

**8.** Testprobe (200, 300, 400, 500) nach einem der vorausgehenden Ansprüche, **dadurch gekennzeichnet, dass** die Testprobe (200, 300, 400, 500) eine einteilige Prüfsubstanzaufnahme (64,66) zur Aufnahme der Prüfsubstanz aufweist.

**9.** Testprobe (200, 300, 400, 500) nach Anspruch 8, **dadurch gekennzeichnet, dass** das Trägermaterial und/oder die Prüfsubstanz mehrteilig sind, wobei das Trägermaterial und/oder Prüfsubstanz von der Prüfsubstanzaufnahme (64, 66) aufgenommen wird.

**10.** Testprobe (200, 300) nach Anspruch 8 oder 9, **dadurch gekennzeichnet, dass** die Prüfsubstanzaufnahme (66) gas-permeable ist.

**11.** Testprobe (200, 300) nach Anspruch 10, **dadurch gekennzeichnet, dass** die Prüfsubstanzaufnahme (66) eine geschlossene Hülle bildet in dessen Innere die Prüfsubstanz angeordnet ist.

**12.** Testprobe (400, 500) nach Anspruch 8 oder 9, **dadurch gekennzeichnet, dass** die Prüfsubstanzaufnahme (64) aus einem nicht-permeablen Material besteht, wobei die Prüfsubstanzaufnahme (64) mindestens eine Öffnung aufweist durch die volatile Stoffe entweichen können.

**13.** Testprobe (400, 500) nach Anspruch 12, **dadurch gekennzeichnet, dass** die mindestens eine Öffnung zu Lagerungszwecken der Prüfsubstanz mit einem nicht-permeablen Material (65) verschlossen ist.

**14.** Testprobe (100, 200, 300, 400, 500) nach einem der vorangehenden Ansprüche, **dadurch gekennzeichnet, dass** die Testprobe (100, 200, 300, 400, 500) zu Lagerungszwecken von einer Hülle aus einem nicht-permeablen Material (80) umschlossen ist.

**15.** Verfahren zur Überprüfung eines Messgeräts (10) unter Verwendung einer Testprobe (100, 200, 300, 400, 500) nach einem der vorangehenden Ansprüche.

**16.** Verfahren nach Anspruch 15, **dadurch gekennzeichnet, dass** das vordefinierte Temperaturprofil Erhitzen auf eine vordefinierte Zieltemperatur $T_1$ und Halten dieser Zieltemperatur $T_1$ entweder während eines vordefinierten Zeitintervalls $\Delta t$ oder bis die Massenänderung pro Zeiteinheit einen vordefinierten Wert unterschreitet, d.h. $\dot{m} \leq a$, umfasst.

**FIG. 1**

FIG. 2a

FIG. 2b

EP 2 442 091 A1

FIG. 4

FIG. 3

FIG. 5

FIG. 7a

FIG. 7b

FIG. 6a

FIG. 6b

EP 2 442 091 A1

FIG. 8a

400, 500

65

A — — — — — — — — — — A

64

FIG. 8b

65

400

64

63

70

FIG. 8c

70

400

FIG. 8d

65

64

500

63

70

69

FIG. 8e

70

500

EP 2 442 091 A1

Europäisches
Patentamt

European
Patent Office

Office européen
des brevets

**EUROPÄISCHER RECHERCHENBERICHT**

Nummer der Anmeldung

EP 10 18 7272

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 1 850 110 A1 (METTLER TOLEDO AG [CH]) 31. Oktober 2007 (2007-10-31) * Absatz [0001] - Absatz [0003] * * Absatz [0041] - Absatz [0048]; Abbildung 1 * ----- | 1-16 | INV. G01N5/04 |
| Y | NG E P ET AL: "Nanoporous materials with enhanced hydrophilicity and high water sorption capacity", MICROPOROUS AND MESOPOROUS MATERIALS, ELSEVIER SCIENCE PUBLISHING, NEW YORK, US, Bd. 114, Nr. 1-3, 1. September 2008 (2008-09-01), Seiten 1-26, XP022736264, ISSN: 1387-1811, DOI: DOI:10.1016/J.MICROMESO.2007.12.022 [gefunden am 2007-12-28] * Seite 2, Zeile 66 - Zeile 74 * * Seite 10, Zeile 29 - Seite 13, Zeile 85; Abbildungen 10-13 * * Seite 16, Zeile 1 - Zeile 21; Abbildung 16 * ----- | 1-16 | |
| A | US 2002/035792 A1 (SCALESE ROBERT F [US] ET AL) 28. März 2002 (2002-03-28) * Absätze [0083], [0205]; Abbildung 1 * ----- | 1-16 | RECHERCHIERTE SACHGEBIETE (IPC) G01N |

Der vorliegende Recherchenbericht wurde für alle Patentansprüche erstellt

| Recherchenort | Abschlußdatum der Recherche | Prüfer |
|---|---|---|
| Den Haag | 24. März 2011 | Eidmann, Gunnar |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
...................................................................................
& : Mitglied der gleichen Patentfamilie, übereinstimmendes
   Dokument

EPO FORM 1503 03.82 (P04C03)

# EP 2 442 091 A1

**ANHANG ZUM EUROPÄISCHEN RECHERCHENBERICHT
ÜBER DIE EUROPÄISCHE PATENTANMELDUNG NR.**

EP 10 18 7272

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-03-2011

| Im Recherchenbericht angeführtes Patentdokument | Datum der Veröffentlichung | Mitglied(er) der Patentfamilie | Datum der Veröffentlichung |
|---|---|---|---|
| EP 1850110 A1 | 31-10-2007 | CN 101063649 A<br>JP 2007292765 A<br>US 2007245813 A1 | 31-10-2007<br>08-11-2007<br>25-10-2007 |
| US 2002035792 A1 | 28-03-2002 | AU 4185499 A<br>US 6247246 B1<br>WO 9961878 A2 | 13-12-1999<br>19-06-2001<br>02-12-1999 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0611956 B1
- EP 1850110 A1
- DE 10024015 C2

- US 2002063128 A1
- WO 9961878 A